# EUROPÄISCHE PATENTSCHRIFT

(11) **EP 0 454 884 B1**
(45) Veröffentlichungstag und Bekanntmachung des Hinweises auf die Patenterteilung: **09.11.1994**
(21) Anmeldenummer: 90108328.7
(22) Anmeldetag: 02.05.1990
(51) Int. Cl.: H04M 11/06, H04M 3/42

(54) **Fernsprechvermittlungsanlage, insbesondere Fernsprechnebenstellenanlage, mit einer zentralen speicherprogrammierten Rechnersteuerung**
Telephone exchange, in particular a private branch exchange with a central stored program computer control
Un central téléphonique, en particulier un central téléphonique privé avec un ordinateur central commandé par un programme mémorisé

(43) Veröffentlichungstag der Anmeldung: 06.11.1991
(73) Patentinhaber: SIEMENS AKTIENGESELLSCHAFT, 80333 München (DE)
(72) Erfinder: Lindemann, Werner, Dr., D-4330 Mülheim 1 (DE)

(56) Entgegenhaltungen:
- DE-A- 2 709 461
- POST OFFICE ELECTRICAL ENGINEERS JOURNAL. vol. 74, no. 4, Januar 1982, LONDONGB Seiten 352 - 358; P.A. Burton et al: "The Development and Production of theAmbassador Electronic Plan System"
- ELECTRICAL COMMUNICATION. vol. 59, no. 3, 1985, BRUSSELS BE Seiten 273 - 280;H. Mulla et al: "Application of Speech Recognition and Synthesis to PABXServices"

## Beschreibung

Die Erfindung betrifft eine Fernsprechvermittlungsanlage, insbesondere Fernsprechnebenstellenanlage, mit einer zentralen speicherprogrammierten, unter anderem die vermittlungstechnische und sicherheitstechnische Steuerung und Koordinierung durchführenden Rechnersteuerung, einem zur Aufnahme zumindest aller vermittlungstechnisch relevanter Daten dienenden Arbeitsspeicher, in dem in endgeräteindividuell zuweisbaren Speicherbereichen endgerätebestimmende Kennzeichen einspeicherbar sind, einem benutzerindividuelle Daten enthaltenden Kundendatenspeicher und mit einer Koppeleinrichtung an die sowohl mit Ziffern- und Funktionstasten als auch mit einer zumindest die optische Darstellung von Informationen ermöglichenden Einheit ausgestattete Teilnehmerendgeräte anschließbar sind und mit einem Anlagenkomponenten verbindenden Systembus, wobei für den Meldungsaustausch zwischen der zentralen Rechnersteuerung und den Teilnehmerendgeräten ein neben dem Nutzdatenkanal bestehender Steuerdatenkanal vorgesehen ist.

In zeitgemäßen Fernsprechanlagen sind eine Fülle unterschiedlicher Leistungsmerkmale bekannt, die einerseits den Bedienerkomfort steigern und andererseits über die Grundfunktionen der Vermittlung hinausgehende Verbindungsmöglichkeiten bieten. Weiterhin sind sie durch ihre Flexibilität hinsichtlich des Einsatzes von unterschiedlichsten Endgeräten gekennzeichnet. Eine Fernsprechvermittlungsanlage dieser bekannten Art ist aus dem Dokument POST OFFICE ELECTRICAL ENGINEERS JOURNAL, vol. 74, n.4, Januar 1982, London, Seiten 352-358, P.A. Burton et al: "The development and production of the Ambassador Electronic Plan System" bekannt. Neben den Zifferntasten weisen derartige Endgeräte zusätzliche Funktionstasten auf, denen durch entsprechende betriebstechnische Anweisungen unterschiedliche Funktionen zugeordnet werden können. Durch deren Betätigung wird beispielsweise die Inanspruchnahme von bestimmten Diensten ermöglicht. Die Möglichkeit einer solchen Inanspruchnahme ist auch von der Art und dem Funktionsumfang der verwendeten Endgeräte abhängig. So gilt beispielsweise für Fernsprechendgeräte, daß digital gesteuerte Fernsprechendgeräte gegenüber analogen Fernsprechendgeräten, die über entsprechende Schnittstellen ebenfalls an digitale Kommunikationssysteme anschließbar sind, zusätzliche Leistungsmerkmale zulassen. Der voraussetzungsgemäß vorgesehene Nutzdatenkanal und der davon getrennt geführte Steuerdatenkanal können getrennt durch unterschiedliche Zeitlagen physikalisch auf dem gleichen Übertragungsmedium realisiert sein, sie können aber auch durch jeweils zwei Adernpaare gebildet werden. Der Steuerdatenkanal dient unter anderem der Übermittlung der benutzerseitig ausgelösten Signalisierungsinformationen, die von der zentralen Rechnersteuerung weiterverarbeitet werden, und von in umgekehrter Richtung durch die Rechnersteuerung ausgesendeten Informationen. Durch solche Informationen kann beispielsweise bei einer sogenannten Key-Kommunikationsanlage an einer Teilnehmerstelle der vermittlungstechnische Zustand der jeweils anderen Teilnehmerstellen angezeigt werden. Neben der Anzeige durch optische Anzeigeelemente, die unmittelbar z. B. einzelnen Funktionstasten zugeordnet sind, können einem Teilnehmer auch optische Hinweise in Form einer Anzeige auf dem an der jeweiligen Endeinrichtung angeordneten Display gegeben werden.

Die der Erfindung zugrundeliegende Aufgabe besteht darin, die außerhalb des Kommunikationsdienstes "Sprache" liegenden Betriebsmöglichkeiten bei einer Fernsprechanlage der eingangs genannten Art in einfacher Weise zu erweitern.

Dies wird erfindungsgemäß dadurch erreicht, daß durch die zentrale Rechnersteuerung eine zusätzlich implementierte Programmsteuerung realisiert ist, durch die diejenigen für die Durchführung mathematischer Operationen eines Spezialrechners notwendigen Prozeduren und die für das Erkennen sowohl der den Spezialrechnermodus als auch der die mathematischen Operationen definierenden Benutzeranforderungen notwendigen Prozeduren vorgenommen werden, daß durch vom jeweiligen Benutzer zu aktivierende Mittel eine den Spezialrechnermodus kennzeichnende Information gebildet und zur zentralen Rechnersteuerung übertragen wird, daß dies die Einspeicherung einer Initialisierungsinformation für die genannten Prozeduren in den endgeräteindividuellen Speicherbereich des Arbeitsspeichers bewirkt, daß daraufhin jede nachfolgende Betätigung einer Zifferntaste und/oder einer Funktionstaste an dem betreffenden Teilnehmerendgerät von der zentralen Rechnersteuerung derart ausgewertet wird, daß ihr eine vorab festgelegte Bedeutung im Zusammenhang mit der Durchführung und dem Abschluß von mathematischen Operationen in dem Spezialrechnermodus zukommt, daß das Ergebnis einer jeden Rechenoperation als eine durch die genannte Einheit ausgebbare Information zu der jeweiligen Endeinrichtung durch die zentrale Rechnersteuerung über den Steuerdatenkanal übertragen wird, daß in gleicher Weise wie die Initialisierungsinformation eine das Verlassen des Spezialrechnermodus bewirkende Endeinformation gebildet und zur Rechnersteuerung übertragen wird.

Von besonderem Vorteil ist die Tatsache, daß ohne jegliche Änderung des über eine entsprechende Anschlußeinheit an das Koppelfeld der Fernsprechvermittlungsanlage angeschlossenen Endgerätes für dieses Endgerät eine zusätzliche Funktionalität, nämlich seine Benutzung als Ein- bzw. als Ausgabegerät für die Simulation der üblicherweise z. B. einem Taschenrechner zukommenden Funktionen ermöglicht wird. Durch eine entsprechende Eingabeprozedur erfolgt in einfacher Weise ein Zustandswechsel der zentralen Steuersoftware für die jeweilige Sprechstelle in einen Spezialrechnermodus. Während dieses Zustandes werden die vom Benutzer vorgenommenen Eingaben und die von der zentralen Rechnersteuerung gelieferten Ergebnisinformationen über den Steuerdatenkanal übermittelt. Es wird somit der Sprachdatenkanal nicht belastet, so daß die Spezialrechnerfunktion unabhängig von einer bestehenden Sprechverbindung aktiviert und genutzt werden kann. Die zusätzliche Nutzung eines Fernsprechendgerätes zur Simulation eines Taschenrechners über die jeweilige Tastatur trägt dazu bei, die Akzeptanz der Benutzer hinsichtlich der insbesondere von modernen Endgeräten ermöglichten Dienste zu fördern.

Gemäß einer Weiterbildung der Erfindung ist die zusätzliche Programmsteuerung durch den Zugriff der zentralen Rechnersteuerung auf ein Programmsystem realisiert, das - im Hinblick auf die den Rechnungsarten und den Rechnungsoperationen zuzuordnenden Funktionen des Spezialrechners und im Hinblick auf die diesbezüglich die Benutzeroberfläche ergänzenden Funktionen - eine task-orientierte Struktur in gleicher Weise wie die die vorgegebenen ursprünglichen Kommunikationsmöglichkeiten realisierenden Programme aufweist. Für diese Simulation eines Spezialrechners über die Eingabemittel eines Endgerätes einer Fernsprechnebenstellenanlage wird keine zusätzliche Hardware benötigt, sondern es genügt, die entsprechenden Programme in den Programmspeicher der Anlage aufzunehmen. Durch die Gliederung des hierfür notwendigen zusätzlichen Programmsystems mit Hilfe des bekannten Task-Konzeptes können in gleicher Weise wie die übrigen Dienste diese Spezialrechnerfunktionen quasi gleichzeitig von einer Mehrzahl von Teilnehmern genutzt werden.

Gemäß einer Weiterbildung der Erfindung stellen die vom jeweiligen Benutzer zu aktivierende Mittel Tasten dar, durch deren Betätigung die eine Umsteuerung in den Spezialrechnermodus und die Durchführung der gewünschten Rechnungen bestimmende Informationen gebildet werden. Diese Mittel sind auch durch akustische Eingabemittel zu realisieren, die gesprochene Befehlsworte aufnehmen und auswerten. Durch Anwendung von sogenannten Sprachbausteinen ist auch im jeweiligen Endgerät eine akustische Ausgabe der Rechenergebnisse möglich.

Bei einer vorgesehenen optischen Ausgabe der Rechenergebnisse können diese gemäß einer Weiterbildung der Erfindung auf dem im jeweiligen Endgerät vorhandenen Display angezeigt werden.

Weitere vorteilhafte Ausgestaltungen der Erfindung sind den restlichen Unteransprüchen zu entnehmen.

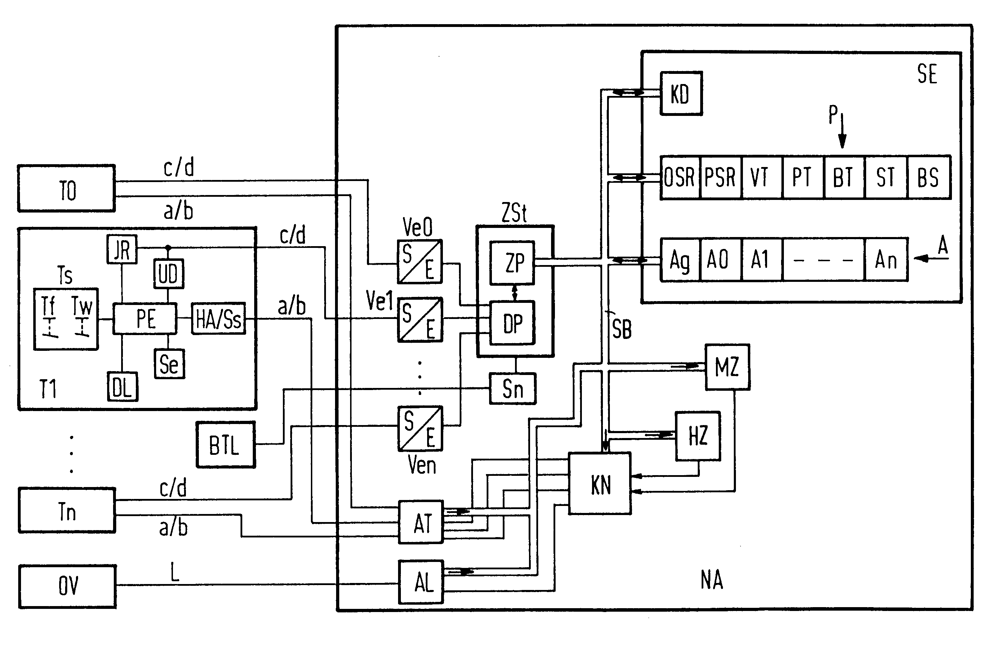

Das erfindungsgemäße Verfahren wird nachstehend anhand einer Figur erläutert. Die Figur zeigt im Blockschaltbild ausgewählte Funktionseinheiten einer Fernsprechnebenstellenanlage NA, an die Teilnehmerendeinrichtungen TO...Tn angeschlossen sind. Dieser Anschluß erfolgt im Ausführungsbeispiel bei einer Vermittlungsanlage, der die analoge Sprachübertragung zugrundelegt, sternförmig über eine jeweils vieradrige Anschlußleitung, die aus einem Sprechadernpaar a/b und einem Signalisierungsadernpaar c/d besteht. Bei einem ausschließlich digitalen System sind die Steuerverbindung und die für die Übertragung der Sprachinformationen vorgesehene Nutzverbindung auf einer zweiadrigen Anschlußleitung realisierbar, wobei dann mindestens ein Nutzdatenkanal und ein Steuerdatenkanal für jede Endeinrichtung durch eine bestimmte Zeitlage realisiert werden kann. Zur im wesentlichen prozeduralen Anpassung werden die Teilnehmerendeinrichtungen TO...Tn über eine Anschalteeinheit AT, die auch die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt die Verbindung über eine Anschalteeinheit AL.

Die Steuerungsaufgaben der Vermittlungsanlage NA übernimmt die zentrale Steuerrechnereinheit ZSt, die über einen Systembus SB mit einer Speichereinheit SE, der Anschalteeinheit AT, der Koppeleinrichtung KN und weiteren Systemkomponenten, wie beispielsweise einer für die Bildung von Mehrfrequenzcodezeichen dienenden Einheit MZ und einer für die Erzeugung der Hörtöne zuständigen Einheit HZ verbunden ist. Die Aufgaben der zentralen Steuerung ZSt sind im Ausführungsbeispiel auf zwei Prozessoren ZP und DP verteilt. Der Prozessor ZP dient beispielsweise der vermittlungs- und betriebstechnischen Steuerung. Durch den Prozessor DP erfolgt eine Aufbereitung und Zuteilung der Steuerdaten. Die Signalisierungsbearbeitung erfolgt unter Einschaltung der ein Sendeteil S und ein Empfangsteil E enthaltenden Verarbeitungseinheit Ve. Solche Verarbeitungseinheiten VeO... Ven sind jeweils einem Signalisierungsadernpaar c/d zugeordnet. Die Prozessoren ZP und DP haben über den Systembus SB Zugriff zu den in der Speichereinrichtung SE abgelegten Daten. Die Speichereinrichtung SE besteht aus einem Programmspeicher P, einem Kundendatenspeicher KD und aus einem Arbeitsspeicher A. Im Programmspeicher P sind das Anlagenbetriebsprogramm BS und die zu ihm bezüglich der Peripherietechnik PT, der Betriebstechnik BT, der Sicherheitstechnik ST und der Vermittlungstechnik VT gehörigen Programme abgespeichert. Weiterhin sind darin noch die der Benutzeroberfläche OSR zuzuordnenden Programme und eine später noch zu erläuternde Programmbibliothek PSR mit mathematischen Funktionen enthalten. In den Speicherteil KD sind die Kundendaten, wie z. B. die den einzelnen Teilnehmerendeinrichtungen TO...Tn zugeteilten Berechtigungen abgelegt. Das Konfigurieren dieser Daten kann z. B. über die Eingabetastatur einer als Betriebsterminal festlegbaren Endeinrichtung TO...Tn oder über ein gegebenenfalls vorgesehenes eigenständiges Betriebsterminal BTL, das über die Schnittstelleneinrichtung Sn angeschlossen ist, erfolgen. Der Arbeitsspeicher A dient unter anderem der Aufnahme von temporären Daten zur Programmablaufsteuerung.

Für die Teilnehmerendeinrichtung Tl sind in der Figur einzelne Funktionskomponenten dargestellt. Über das jeweilige a/b-Adernpaar werden Sprachinformationen übertragen. Mit diesen Sprechadern ist die Sprechschaltung Sp verbunden. Sie dient im Zusammenhang mit dem Handapparat HA der Verarbeitung der übertragenen Sprachinformationen und bildet den Leitungsabschluß. Mit der Einheit Ts ist schematisch eine Tastatur dargestellt, die mit einer in jeder als Systemteilnehmerstelle ausgebildeten Endeinrichtung zur Steuerung ihrer Funktion vorhandenen und z.B. durch einen Prozessor realisierten Steuereinheit PE gekoppelt ist. Die Taste Tw symbolisiert eine übliche Wähltastatur. Die Taste Tf steht für eine Reihe von weiteren Tasten, insbesondere sogenannten Funktionstasten, durch deren Betätigung jeweils bestimmte Funktionsabläufe aktiviert werden können. Hierzu gehören z. B. mittels des Anlagenbetriebsprogrammes realisierbare Leistungsmerkmale. Den Funktionstasten Tf können bestimmte Funktionen fest zugeordnet sein oder alternativ hierzu frei zugeordnet werden.

Mit der Steuereinheit PE sind ferner die Einheiten IR, UD, Se und DL verbunden. Die Einheit IR erkennt die Betätigung einzelner Tasten Tw, Tf, bildet entsprechende Signalisierungsinformationen und gibt diese über die Signalisierungsadern c/d an die Vermittlungsanlage NA oder unmittelbar an das der Teilnehmerendeinrichtung zugeordnete Display DL ab. Beispielsweise werden durch Wähltasten Tw erzeugte Anreize in graphischer Form als Ziffern auf dem Display DL dargestellt. Die Einheit UD registriert die Informationen, die einer Teilnehmerendeinrichtung über die jeweiligen c/d-Signalisierungsadern von der Vermittlungsanlage NA zur weiteren Verarbeitung zugeführt werden. Die Einheit Se ist als Speicher ausgebildet und dient beispielsweise der Aufnahme eines Betriebsprogramms für die Steuereinheit PE und zwischenzuspeichernder Daten.

Es ist nun erfindungsgemäß vorgesehen, daß über die Tastatur Ts eines an die Nebenstellenanlage, die vorzugsweise eine sogenannte Key-Anlage darstellt, angeschlossenen Endgerätes die Simulation eines speziellen Rechners ermöglicht wird. Für diesen speziellen Rechner können diejenigen Funktionen vorgesehen sein, die z. B. für einen normalen Taschenrechner üblich sind. Die Programminformationen für die Durchführung der Rechnerfunktionen sind nicht in den einzelnen Endgeräten abgelegt, sondern sie sind zentral im Programmspeicher des Systems vorhanden, zu dem der Zentralprozessor ZP den entsprechenden Zugriff hat. Der für die Aufgabenbereiche z. B. der Sprach- und Datenkommunikation vorhandene und der sogenannten Benutzeroberfläche zugehörige Programmteil OSR wird um einen den Aufgabenbereich "Spezialrechnerfunktion" zugeordneten Programmteil ergänzt. Die Aktivierung dieser Rechnerfunktion erfolgt durch eine entsprechende Eingabeprozedur von einem Fernsprechendgerät aus. Dies erfolgt durch die Betätigung einer bestimmten Funktionstaste und/oder durch die tastenmäßige Eingabe einer bestimmten Dienstekennziffer. Die Tastendrücke werden über den Steuerdatenkanal, im Ausführungsbeispiel das c/d-Adernpaar, an die Zentrale übertragen. Es erfolgt danach ein Zustandswechsel der zentralen Steuersoftware für das jeweilige Endgerät in einen Rechnermodus. Der Übergang in diesen Rechnermodus ist also rein softwaremäßig realisiert und erfolgt nicht durch ein hardwaremäßiges Umschalten. Durch die auf den Rechnermodus bezogene Benutzeroberfläche wird die Tastenbetätigung des Benutzers in eine entsprechende Funktion umgewertet und die Plausibilität dieser Tastenbetätigungen überprüft. In dieser Benutzeroberfläche ist also die Art der Eingabestrategie für die für den Rechenvorgang erforderlichen Operanden definiert. Neben der hinsichtlich des zusätzlich vorgesehenen "Spezialrechners" erweiterten Benutzeroberfläche ist noch ein zusätzliches Programmteil PSR vorzusehen. Dieses Programmteil stellt eine Programmbibliothek mit den mathematischen Funktionen einschließlich der Kommazahlenoperationen dar. Durch die mittels der Benutzeroberfläche vorgenommenen Bewertung wird erkannt, was der Benutzer wünscht, und mit Hilfe dieser Programmbibliothek ist dann der darauf zugreifende Zentralprozessor ZP befähigt, die entsprechenden Rechenoperationen durchzuführen. Das Programmsystem für diese Spezialrechnerfunktionen ist in gleicher Weise wie das Programmsystem für die Sprachkommunikation und gegebenenfalls der Datenkommunikation task-orientiert, so daß die entsprechenden Programmteile von einer Mehrzahl von Endgeräten aus quasi gleichzeitig genutzt werden können. Solche im Rahmen des Spezialrechnermodus unabhängig voneinander und damit auch gleichzeitig anzufordernden Bearbeitungsfälle werden dann dadurch abgearbeitet, daß einem Endgerät im Wechsel mit anderen Endgeräten der auf die Programmbibliothek zugreifende Zentralprozessor zur Verfügung gestellt wird. Diese Aufgabe übernimmt das Organisationsprogramm des implementierten Betriebssystems BS. Dies erfolgt nach den hierfür vorgegebenen Kriterien.

Die Eingaben für den vorzunehmenden Zustandswechsel in den Rechnermodus und die Eingaben während des Rechnermodus erfolgen über den Zifferntastenblock und über die vorhandenen Funktionstasten des jeweiligen Endgerätes. Dabei werden die Eingaben über Zifferntasten im Rechnermodus als Operanden-Ziffern gewertet. Den einzelnen Funktionstasten sind die z. B. für einen Taschenrechner üblichen Operationen zugeordnet. Welche Taste dabei z. B. als Operator oder als "Memory"-Taste interpretiert wird, ist entsprechend softwaremäßig vorgegeben. Die Anforderung des Rechnermodus durch einen Benutzer und die in diesem Modus vorgenommenen weiteren Eingaben werden bei der zyklischen Bearbeitung der einzelnen Teilnehmerendeinrichtungen durch den zentralen Prozessor ZP erkannt. Als Folge davon wird in dem einem Teilnehmer TO...Tn jeweils zugeordneten Speicherbereich AO...An des Arbeitsspeichers A eine Initialisierungsinformation eingeschrieben. Die Arbeitsspeicherbereiche AO...An werden je nach den temporären Erfordernissen zum Teil dynamisch angelegt und sind nicht notwendig blockweise, d. h. hintereinanderliegend angeordnet. Dieser Arbeitsspeicher A enthält noch den weiteren Speicherbereich Ag für die allgemeinen Daten. In solchen endgeräteindividuellen Speicherbereichen AO...An werden dann neben einer Initialisierungsinformation für die mit dem Rechnermodus in Zusammenhang stehenden Prozeduren auch die Zwischenergebnisse eines solchen Rechnervorganges eingespeichert, in gleicher Weise wie dies für die aktuellen Variablen der vermittlungstechnischen Abläufe erfolgt. Das Ergebnis eines angeforderten Rechenvorganges wird dem jeweiligen Endgerät von der Zentrale übermittelt und auf dem Display DL zur Anzeige gebracht. Die Informationen über alle Tastendrücke während des Rechnermodus am Endgerät und alle Ausgaben der Zentrale an das Endgerät werden über den Steuerdatenkanal bzw. im Ausführungsbeispiel über das Signalisierungsadernpaar c/d übertragen und belasten somit nicht den Sprachdatenkanal. Die "Taschenrechnerfunktion" kann also unabhängig von einer bestehenden Sprechverbindung aktiviert und genutzt werden.

## Patentansprüche

1. Fernsprechvermittlungsanlage, insbesondere Fernsprechnebenstellenanlage (NA), mit einer zentralen speicherprogrammierten, u. a. die vermittlungstechnische und sicherheitstechnische Steuerung und Koordinierung durchführenden Rechnersteuerung (ZSt), einem zur Aufnahme zumindest aller vermittlungstechnisch relevanter Daten dienenden Arbeitsspeicher (A), in dem in endgeräteindividuell zuweisbaren Speicherbereichen (AO...An) endgerätebestimmende Kennzeichen einspeicherbar sind, einem benutzerindividuelle Daten enthaltenden Kundendatenspeicher (KD), einem Programmspeicher (P) und mit einer Koppeleinrichtung (KN), an die sowohl mit Ziffern- und Funktionstasten als auch mit einer zumindest die optische Darstellung von Informationen ermöglichenden Einheit (DL) ausgestattete Teilnehmerendgeräte (TO...Tn) anschließbar sind und mit einem Anlagenkomponenten verbindenden Systembus (SB), wobei für den Meldungsaustausch zwischen der zentralen Rechnersteuerung und den Teilnehmerendgeräten ein neben dem Nutzdatenkanal bestehender Steuerdatenkanal vorgesehen ist,
**dadurch gekennzeichnet**,
daß durch die zentrale Rechnersteuerung (ZSt) eine zusätzlich implementierte Programmsteuerung (PSR, OSR) realisiert ist, durch die diejenigen für die Durchführung mathematischer Operationen eines Spezialrechners notwendigen Prozeduren und die für das Erkennen sowohl der den Spezialrechnermodus als auch der die mathematischen Operationen definierenden Benutzeranforderungen notwendigen Prozeduren vorgenommen werden, daß durch vom jeweiligen Benutzer zu aktivierende Mittel eine den Spezialrechnermodus kennzeichnende Information gebildet und zur zentralen Rechnersteuerung (ZSt) übertragen wird, daß dies die Einspeicherung einer Initialisierungsinformation für die genannten Prozeduren in den endgeräteindividuellen Speicherbereich (A1) des Arbeitsspeichers (A) bewirkt, daß daraufhin jede nachfolgende Betätigung einer Zifferntaste (Tw) und/oder einer Funktionstaste (Tf) an dem betreffenden Teilnehmerendgerät (T1) von der zentralen Rechnersteuerung derart ausgewertet wird, daß ihr eine vorab festgelegte Bedeutung im Zusammenhang mit der Durchführung und dem Abschluß von mathematischen Operationen in dem Spezialrechnermodus zukommt, daß das Ergebnis einer jeden Rechenoperation als eine durch die genannte Einheit ausgebbare Information zu der jeweiligen Endeinrichtung (T1) durch die zentrale Rechnersteuerung über den Steuerdatenkanal (c/d) übertragen wird, daß in gleicher Weise wie die Initialisierungsinformation eine das Verlassen des Spezialrechnermodus bewirkende Endeinformation gebildet und zur Rechnersteuerung übertragen wird.

2. Fernsprechvermittlungsanlage nach Anspruch 1,
**dadurch gekennzeichnet**,
daß die zusätzliche Programmsteuerung durch den Zugriff der zentralen Rechnersteuerung auf ein Programmsystem realisiert ist, das im Hinblick auf die den verschiedenen Rechnungsarten und Rechnungsoperationen zuzuordnenden Funktionen des Spezialrechners und im Hinblick auf die diesbezüglich die Benutzeroberfläche ergänzenden Funktion eine task-orientierte Struktur in gleicher Weise wie die die vorgegebenen ursprünglichen Kommunikationsmöglichkeiten realisierenden Programme aufweist.

3. Fernsprechvermittlungsanlage nach Anspruch 1,
**dadurch gekennzeichnet,**
daß die vom jeweiligen Benutzer zu aktivierende Mittel Tasten (Tf, Tw) darstellen, durch deren Betätigung eine Umsteuerung in den Spezialrechnermodus und die die gewünschten Rechnungsabläufen bestimmenden Informationen gebildet werden.

4. Fernsprechvermittlungsanlage nach Anspruch 1,
**dadurch gekennzeichnet**,
daß die vom jeweiligen Benutzer zu aktivierenden Mittel als akustische Eingabemittel realisiert sind, die gesprochene Befehlsworte aufnehmen und auswerten.

5. Fernsprechvermittlungsanlage nach Anspruch 1,
**dadurch gekennzeichnet**,
daß die Einheit zur optischen Anzeige des Ergebnisses einer jeweils angeforderten Rechenoperation ein am jeweiligen Endgerät (T1) vorhandenes Display (DL) darstellt.

6. Fernsprechvermittlungsanlage nach den Ansprüchen 1 und 2,
**dadurch gekennzeichnet**,
daß nach dem Übergang in den Spezialrechnermodus die am Teilnehmerendgerät vorhandenen Zifferntasten der Eingabe der durch die Rechenoperation zu verknüpfenden Zahlen dienen, daß die Funktionstasten als Tasten für die Eingabe der gewünschten Rechenoperation und der eine solche Rechenoperation begleitenden Information dienen.

7. Fernsprechvermittlungsanlage nach Anspruch 1,
**dadurch gekennzeichnet**,
daß nach Initiierung der Endeinformation die Abgabe eines Quittungssignals an das den Spezialrechnermodus einleitende Teilnehmerendgerät bewirkt wird.

8. Fernsprechvermittlungsanlage nach einem der Ansprüche 1 bis 7,
**dadurch gekennzeichnet**,
daß im Spezialrechnermodus die für einen handelsüblichen Taschenrechner vorgesehenen mathematischen Funktionen realisierbar sind.

## Claims

1. Telephone exchange, in particular a private branch exchange (NA), with a central stored-program computer control (ZSt) carrying out, among other things, switching- and dependability-related control and coordination, a main memory (A) used for accommodating at least all switching-related data, in which terminal-determining signals can be stored in terminal-individually allocatable storage areas (A0...An), a customer data memory (KD) containing user-individual data, a program memory (P) and with a switching device (KN), to which subscriber terminals (T0...Tn) can be connected which are equipped both with number and function keys and with a unit (DL) providing at least for the visual representation of information items, and with a system bus (SB) connecting system components, a control data channel, which exists in addition to the user data channel, being provided for exchanging messages between the central computer control and the subscriber terminals, characterized in that the central computer control (ZSt) implements an additionally implemented program control (PSR, OSR), by means of which the procedures necessary for executing mathematical operations of a special computer and the procedures necessary for recognizing both the user requests defining the special computer mode and the user requests defining the mathematical operations are carried out, in that an information item identifying the special computer mode is formed by means to be activated by the respective user and is transmitted to the central computer control (ZSt), in that this causes the storage of an initialization information item for the said procedures in the terminal-individual memory area (A1) of the main memory (A), in that thereupon each subsequent operation of a number key (Tw) and/or of a function key (Tf) at the relevant subscriber terminal (T1) is evaluated by the central computer control in such a manner that a predetermined significance in connection with the execution and the conclusion of mathematical operations in the special computer mode is imparted to it, in that the result of each mathematical operation is transmitted as an information item, which can be output by the said unit, to the respective terminal device (T1) by the central computer control via the control data channel (c/d), in that an end information item causing the departure from the special computer mode is formed in the same manner as the initialization information item and is transmitted to the computer control.

2. Telephone exchange according to Claim 1, characterized in that the additional program control is implemented by the central computer control accessing a program system which exhibits, with regard to the functions of the special computer to be allocated to the various types of computation and computing operations and with regard to the functions supplementing the user interface in this respect, a task-oriented structure in the same manner as the programs implementing the predetermined original communication capabilities.

3. Telephone exchange according to Claim 1, characterized in that the means to be activated by the respective user represent keys (Tf, Tw), by the operation of which a switch-over to the special computer mode and the information items determining the desired computational sequences are formed.

4. Telephone exchange according to Claim 1, characterized in that the means to be activated by the respective user are implemented as acoustic input means which receive and evaluate spoken command words.

5. Telephone exchange according to Claim 1, characterized in that the unit for the visual indication of the result of a computational operation in each case requested represents a display (DL) provided on the respective terminal (T1).

6. Telephone exchange according to Claims 1 and 2, characterized in that, after the transition to the special computer mode, the number keys provided on the subscriber terminal are used for inputting the numbers to be logically combined by the mathematical operation, in that the function keys are used as keys for inputting the desired mathematical operation and the information item accompanying such a mathematical operation.

7. Telephone exchange according to Claim 1, characterized in that, after initiation of the end information item, the output of an acknowledgement signal to the subscriber terminal initiating the special computer mode is effected.

8. Telephone exchange according to one of Claims 1 to 7, characterized in that the mathematical functions provided for a commercially available pocket calculator can be implemented in the special computer mode.

## Revendications

1. Installation de commutation téléphonique, notamment installation téléphonique à central privé (NA), comportant une unité de commande centrale assistée par ordinateur (ZSt) et à programmation à mémoire et qui exécute notamment la commande et la coordination du point de vue de la technique de commutation et de sécurité, une mémoire de travail (A) servant à recevoir au moins toutes les données concernant la technique de commutation et dans laquelle des signaux caractéristiques déterminant le terminal peuvent être mémorisés dans des zones de mémoire (A0...An) pouvant être affectées à chaque terminal, une mémoire de données de clients (KD), qui contient des données pour chaque utilisateur, une mémoire de programme (P) et un dispositif de couplage (KN), auquel peuvent être raccordés des terminaux d'abonnés (T0... Tn) qui sont équipés aussi bien de touches portant des chiffres et de touches fonctionnelles que d'une unité (DL) qui permet au moins la représentation optique d'informations, et un bus de système (SB) qui relie les composants de l'installation, et dans laquelle il est prévu un canal de transmission de données de commande, qui est présent à côté du canal de transmission de données utiles, pour l'échange de signalisation entre l'unité de commande centrale à ordinateur et les terminaux d'abonnés,
caractérisée par le fait
qu'au moyen de l'unité de commande centrale assistée par ordinateur (ZSt) est réalisée une unité de commande à programme (PSR, OSR), qui est formée en supplément et au moyen de laquelle sont exécutées les procédures nécessaires à cette unité pour l'exécution d'opérations mathématiques d'un ordinateur spécial, et les procédures nécessaires pour l'identification aussi bien de demandes d'utilisateurs définissant le mode de l'ordinateur spécial que de demandes d'utilisateurs définissant les opérations mathématiques, qu'une information caractérisant le mode de l'ordinateur spécial est formée par des moyens devant être activés par l'utilisateur concerné et est transmise à l'unité de commande centrale assistée par ordinateur (ZSt), que ceci déclenche la mémorisation d'une information d'initialisation pour les procédures indiquées dans la zone de mémoire (A1), prévue pour chaque terminal, de la mémoire de travail (A), qu'alors chaque actionnement suivant d'une touche à chiffre (Tw) et/ou d'une touche fonctionnelle (Tf) au niveau du terminal d'abonné considéré (TA), est évalué par l'unité de commande centrale assistée par ordinateur de telle sorte qu'il lui attribue une signification fixée auparavant, en liaison avec l'exécution et la fin de l'opération mathématique dans le mode de l'ordinateur spécial, que le résultat de chaque opération de calcul est transmis en tant qu'information pouvant être délivrée par ladite unité, au terminal respectif (T1) par l'unité de commande centrale assistée par ordinateur au moyen du canal de transmission de données de commande (c/d), et qu'une information de fin, qui provoque l'abandon du mode de l'ordinateur spécial, est formée de la même manière que l'information d'initialisation et est transmise à l'unité de commande assistée par ordinateur.

2. Installation de commutation téléphonique suivant la revendication 1, caractérisée par le fait que la commande supplémentaire par programme est obtenue au moyen de l'accès de l'unité de commande centrale assistée par ordinateur à un système de programme, qui, en rapport avec les fonctions de l'ordinateur spécial, qui doivent être associées aux différents types de calcul et aux différentes opérations de calcul, et, en rapport avec la fonction complétant à cet égard la surface d'utilisation, possède une structure axée sur les tâches, de la même manière que les programmes qui réalisent les possibilités initiales prédéterminées de communication.

3. Installation de commutation téléphonique suivant la revendication 1, caractérisée par le fait que les moyens devant être activés par l'utilisateur sont des touches (Tf, Tw), dont l'actionnement conduit à une commutation du mode de l'ordinateur spécial et aboutit à la formation des informations déterminant les cycles de calcul désirés.

4. Installation de commutation téléphonique suivant la revendication 1, caractérisée par le fait que les moyens devant être activés par l'utilisateur sont réalisés sous la forme de moyens d'entrée acoustiques, qui reçoivent et évaluent des mots d'instructions parlés.

5. Installation de commutation téléphonique suivant la revendication 1, caractérisée par le fait que l'unité servant à réaliser l'affichage optique du résultat de chaque opération de calcul demandée est un dispositif d'affichage (DL) présent dans le terminal concerné (T1).

6. Installation de commutation téléphonique suivant les revendications 1 et 2, caractérisée par le fait qu'après le passage au mode de l'ordinateur spécial, les touches à chiffres, qui sont présentes dans le terminal d'abonné, servent à introduire les chiffres devant être combinés par l'opération de calcul et que les touches fonctionnelles sont utilisées en tant que touches pour l'introduction de l'opération de calcul désirée et de l'information accompagnant une telle opération de calcul.

7. Installation de commutation téléphonique suivant la revendication 1, caractérisée par le fait qu'après l'initialisation de l'information de fin, la délivrance d'un signal d'accusé de réception au terminal d'abonné déclenchant le mode de l'ordinateur spécial est déclenchée.

8. Installation de commutation téléphonique suivant l'une des revendications 1 à 7, caractérisée par le fait que dans le mode de l'ordinateur spécial, les fonctions mathématiques, prévues pour un calculateur de poche usuel dans le commerce, peuvent être exécutées.
